# EUROPEAN PATENT APPLICATION

(11) **EP 4 349 664 A1**
(43) Date of publication of application: **10.04.2024**
(21) Application number: 22814776.5
(22) Date of filing: 08.03.2022
(51) Int. Cl.: B60R 21/213, B60R 21/233, B60R 21/2338

(54) **SAFETY AIRBAG**

(30) Priority: 31.05.2021 CN 202121194150 U
(71) Applicant: Autoliv Development AB, 447 83 Vårgårda (SE)
(72) Inventor: MENG, Qiang, Shanghai 201807 (CN); WANG, Ting, Shanghai 201807 (CN)
(74) Representative: Feucker, Max Martin
(86) International application number: PCT/CN2022/079710
(87) International publication number: WO 2022/252728

(57) **Abstract**

The present invention relates to a safety airbag for being mounted at the top of a vehicle, including: an airbag, having an inflated state and a stowed state, wherein the airbag includes a first airbag (11) and a second airbag (12) configured to be in fluid communication with each other, the first airbag (11) extending beyond the second airbag (12) in both the front and rear direction when the airbag is in the inflated state, the second airbag (12) having a recessed portion formed by a first side flank (121) and a second side flank (122) and used to accommodate an occupant head, and the safety airbag further including a guide (13, 13A, 13B, 13C) provided at a connecting position of the first airbag (11) and the second airbag (12), and the guide (13, 13A, 13B, 13C) being used to guide a gas flow of one of the first airbag (11) and the second airbag (12) towards the other. The safety airbag has a simple structure and low manufacturing costs.

## Description

### TECHNICAL FIELD

The present invention relates to a safety apparatus in a vehicle, and in particular, to a safety airbag.

### BACKGROUND

Safety airbags are widely used in existing vehicles as safety devices for protecting occupants. A safety airbag is, for example, a safety airbag arranged in a steering wheel, a safety airbag arranged in a dashboard, or an overhead safety airbag arranged at the top of a vehicle. When a vehicle is hit or impacted, a gas generator of a safety airbag receives a signal transmitted by means of a wire harness connected to the gas generator so as to ignite a propellant. Then, gas generated by the burning propellant rapidly inflates a folded airbag of the safety airbag, and the inflated airbag expands to protect an occupant from injury brought about by a collision.

However, statistics indicate that the probability of a head-on collision between two vehicles is low, but the probability of a front surface of a vehicle being hit obliquely, i.e., the probability of an oblique collision occurring, is high. However, during an oblique collision, the head and the chest of the occupant may slide off of the airbag of the safety airbag. Therefore, the head and the chest of the occupant are no longer located within a protection region of the airbag of the safety airbag, and instead hit other structures in the vehicle and thus get injured. As a result, since it is difficult for safety airbags in the prior art to guarantee that the occupant is located within the protection region of the airbag during a collision, safety airbags thus have low reliability and safety.

Therefore, a safety airbag having high reliability and safety is desired.

### SUMMARY

An objective of the present invention is to provide a safety airbag having high reliability and safety. Moreover, the safety airbag of the present invention can achieve the objectives of a simple structure and low manufacturing costs.

Provided in the present invention is a safety airbag for being mounted at the top of a vehicle, comprising:
an airbag, having an inflated state and a stowed state;
wherein,
the airbag comprises a first airbag and a second airbag configured to be in fluid communication with each other, the first airbag extending beyond the second airbag in both the front and rear direction when the airbag is in the inflated state, the second airbag having a recessed portion formed by a first side flank and a second side flank and used to accommodate an occupant head, and
the safety airbag further comprising a guide provided at a connecting position of the first airbag and the second airbag, and the guide being used to guide a gas flow of one of the first airbag and the second airbag towards the other.

According to an embodiment of the present invention, communication openings are provided at only a portion of opposite surfaces of the first airbag and the second airbag, and the guide is provided at the communication openings, the first airbag and the second airbag being connected only at the communication openings to allow relative displacement of the first airbag and the second airbag in the inflated state.

According to an embodiment of the present invention, the guide comprises a direction-changing portion, and gas flowing to the direction-changing portion is blocked and therefore changes direction.

According to an embodiment of the present invention, the guide further comprises a guiding portion adjacent to the direction-changing portion, and the gas is guided by the guiding portion after having the direction thereof changed by the direction-changing portion.

According to an embodiment of the present invention, the guide is constructed to be formed by a single sheet, the direction-changing portion being constructed to be a section of the single sheet, and the guiding portion being constructed to be an opening portion of the single sheet.

According to an embodiment of the present invention, a plurality of direction-changing portions are provided, and a plurality of guiding portions are provided, the direction-changing portions and the guiding portions being alternately arranged.

According to an embodiment of the present invention, the first airbag is constructed to be flat in the inflated state.

According to an embodiment of the present invention, the first side flank and the second side flank are formed by the same piece of fabric.

According to an embodiment of the present invention, the first side flank comprises a first inner side surface for forming the recessed portion, and the second side flank comprises a second inner side surface for forming the recessed portion, the first inner side surface and the second inner side surface being adjacent to each other.

According to an embodiment of the present invention, the safety airbag further comprises a first pull strap and a second pull strap, the first pull strap being constructed to be provided on an inner side of the first airbag and fixed to two side surfaces of the first airbag in the thickness direction, the second pull strap being constructed to be provided on an inner side of the second airbag, one end thereof being constructed to be connected to a front side of the second airbag, and the other end of the pull strap being constructed to be connected between the first side flank and the second side flank.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, where
FIG. 1 schematically illustrates a safety airbag according to an embodiment of the present invention.
FIG. 2 schematically illustrates some components in a safety airbag according to an embodiment of the present invention.
FIG. 3(a) to FIG. 3(c) schematically illustrate some components in a safety airbag according to other embodiments of the present invention.
FIG. 4 schematically illustrates a method for manufacturing a safety airbag according to an embodiment of the present invention.

### DETAILED DESCRIPTION

Specific embodiments of the safety airbag according to the present invention will be described below with reference to the accompanying drawings. The following detailed description and the accompanying drawings are used to illustratively explain the principles of the present invention. The present invention is not limited to the described preferred embodiments, and various embodiments described in the present invention can be used individually or in any combination. The protection scope of the present invention is defined by claims.

In addition, terms for spatial relations (such as "upper", "lower", "left", "right", etc.) are used to describe a relative positional relationship between an element and another element shown in the accompanying drawings. Therefore, when used, the terms for spatial relations may be applied to directions different from those shown in the accompanying drawings. Obviously, although all of these terms for spatial relations refer to the directions shown in the accompanying drawings for ease of explanation, a person skilled in the art will appreciate that directions different from those shown in the drawings may be used.

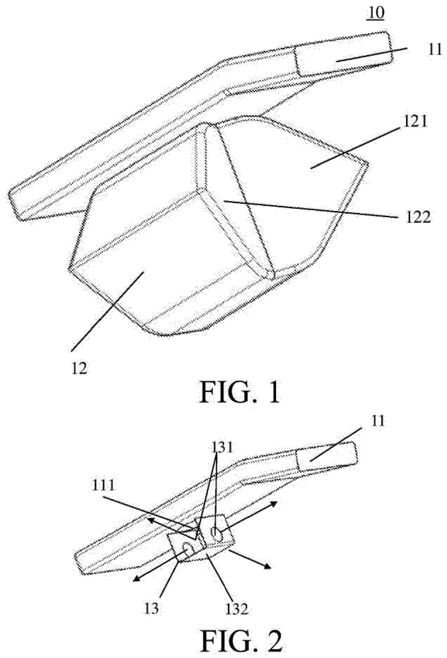

FIG. 1 schematically illustrates a safety airbag according to an embodiment of the present invention. The safety airbag according to an embodiment of the present invention is described below with reference to FIG. 1.

As shown in FIG. 1, the safety airbag 10 provided in the present invention is for being mounted at the top of a vehicle, and therefore, may also be referred to as an overhead safety airbag. The safety airbag 10 includes an airbag having an inflated state and a stowed state. When the airbag is in the inflated state, the airbag is used to protect an occupant. When the airbag is in the stowed state, the airbag is stowed in a predetermined position of the vehicle (e.g., the top of the vehicle). In the safety airbag 10 of the present invention, the airbag includes a first airbag 11 and a second airbag 12 configured to be in fluid communication with each other. The first airbag 11 extends beyond the second airbag 12 in both the front and rear direction when the airbag is in the inflated state. As an embodiment of the present invention, as shown in FIG. 1, the first airbag 11 is constructed to be flat in the inflated state.

It should be noted that the "front and rear direction" here refers to the front-and-rear direction of the vehicle, and the first airbag 11 extends beyond the second airbag 12 in both the front and rear direction of the vehicle, so that front and rear ends of the first airbag 11 are reliably positioned in predetermined positions. Particularly, the front end of the first airbag 11 can be reliably positioned, for example, between a dashboard and a windshield of the vehicle, and in addition, the rear end of the first airbag 11 is positioned at the top of the vehicle, so that the entire airbag easily maintains stability in the inflated state.

Please continue to refer to FIG. 1. As shown in FIG. 1, the second airbag 12 has a recessed portion formed by a first side flank 121 and a second side flank 122 and used to accommodate an occupant head. The safety airbag 10 further includes a guide 13 (not shown in FIG. 1) provided at a connecting position of the first airbag 11 and the second airbag 12, and the guide 13 is used to guide a gas flow of one of the first airbag 11 and the second airbag 12 towards the other. The foregoing will be described in further detail below.

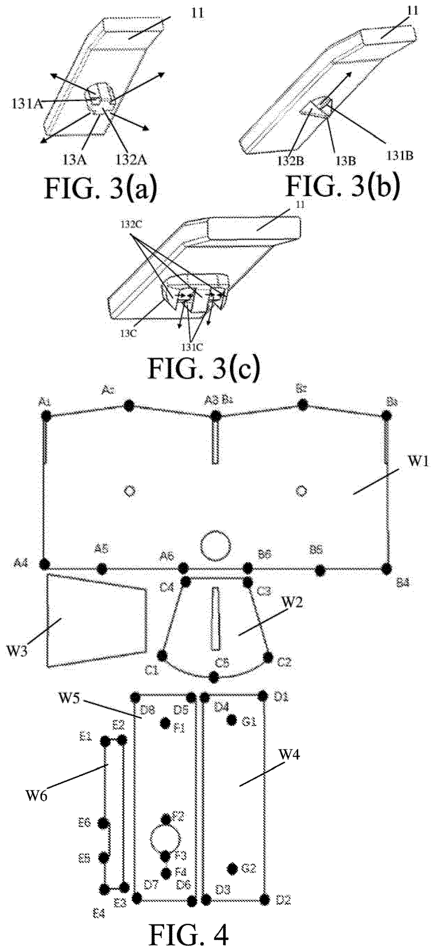

FIG. 2 schematically illustrates some components in a safety airbag according to an embodiment of the present invention. FIG. 3(a) to FIG. 3(c) schematically illustrate some components in a safety airbag according to other embodiments of the present invention. Some components in the safety airbag according to a plurality of different embodiments of the present invention are described below with reference to FIG. 2 and FIG. 3(a) to FIG. 3(c). It should be noted that the following description is based on a gas generator being provided in the first airbag. That is, the guide is used to guide gas in the first airbag to flow towards the second airbag. However, the foregoing is merely an example, and the safety airbag of the present invention is not limited thereto. For example, the gas generator may also be provided in the second airbag, and in this case, the guide is used to guide gas in the second airbag to flow towards the first airbag. Illustrative descriptions are provided below.

As shown in FIG. 2, FIG. 2 illustrates some components in the safety airbag according to an embodiment of the present invention. Specifically, in order to be able to clearly observe the structure of the safety airbag of the present invention, the first airbag 11 and the guide 13 are shown. In the present embodiment, communication openings are provided between the first airbag 11 and the second airbag 12. FIG. 2 shows that a lower side of the first airbag 11 is provided with a communication opening 111. Correspondingly, an upper side of the second airbag 12 shown in FIG. 1 is likewise provided with a communication opening (not shown). The gas flow between the first airbag 11 and the second airbag 12 is achieved by means of the correspondingly provided communication openings. In addition, the communication openings are provided at only a portion of opposite surfaces of the first airbag 11 and the second airbag 12, and the first airbag 11 and the second airbag 12 are connected only at the communication openings, so as to allow relative displacement of the first airbag 11 and the second airbag 12 in the inflated state, thereby facilitating better accommodation of the occupant head so as to reliably protect the occupant. In addition, the guide 13 is provided at the communication opening 111, and is used to guide the gas flow between the first airbag 11 and the second airbag 12. As an advantage of providing the guide 13, the guide 13 can be used to decelerate the gas flow between the first airbag 11 and the second airbag 12, thereby preventing difficulty in positioning the airbag in a predetermined position caused by overly fast expansion of the airbag.

Specifically, as shown in FIG. 2, the guide 13 includes a direction-changing portion 132 and a guiding portion 131 adjacent to the direction-changing portion 13, and the gas flowing downwards to the direction-changing portion 132 is blocked and therefore changes direction, and is then guided by the guiding portion 131 to flow in four directions, as indicated by arrows. It can be understood that, under the action of the guide 13, a direction of flow of the gas changes from a downward direction to a direction basically parallel to a lower side surface of the first airbag 11.

As an embodiment of the present invention, the guide 13 is constructed to be formed by a single sheet. It can be understood that, for the guide 13 shown in FIG. 2, manufacturing steps include: bending the single flat sheet, and machining a hole in a particular position on the sheet. Therefore, the direction-changing portion 132 is constructed to be a section of the single sheet, and the guiding portion 132 is constructed to be an opening portion of the single sheet. The opening portion includes an opening portion formed after the hole is machined and an opening portion formed by bending.

As alternative embodiments of the embodiment shown in FIG. 2, the guide may also be configured to have the structures shown in FIG. 3(a) to FIG. 3(c). The guide 13A shown in FIG. 3(a) is obtained by subjecting a single sheet to only a bending process, and the direction-changing portion 132A thereof is in the shape of a cross. The guiding portion 131A is formed by the opening portion formed by bending the single sheet. The gas is guided by the guiding portion 131A to flow in four directions, as indicated by arrows. The guide 13B shown in FIG. 3(b) is obtained by subjecting a single sheet to only a bending process, and the direction-changing portion 131B thereof and the lower side surface of the first airbag 11 are positioned to form a certain angle. The guiding portion 132B is formed by the opening portion formed by bending the single sheet. The guiding portion 132B guides the gas in only one direction, as indicated by an arrow. The guide 13C shown in FIG. 3(c) includes a plurality of direction-changing portions 132C and a plurality of guiding portions 131C. The direction-changing portions 132C and the guiding portions 131C are alternately arranged. The guiding portions 131C guide the gas in only one direction, as indicated by an arrow. It can be understood that several examples of the guide in the safety airbag of the present invention are described above, but the guide of the present invention is not limited thereto. Any guide capable of causing gas to change direction so as to reduce the flow rate of the gas can be used in the safety airbag of the present invention.

As an embodiment of the present invention, the first side flank and the second side flank are formed by the same piece of fabric. As an embodiment of the present invention, the first side flank includes a first inner side surface for forming the recessed portion, and the second side flank includes a second inner side surface for forming the recessed portion, the first inner side surface and the second inner side surface being adjacent to each other. This advantageously simplifies manufacturing steps of the safety airbag and reduces manufacturing costs.

As an embodiment of the present invention, the safety airbag further includes a first pull strap and a second pull strap, the first pull strap being constructed to be provided on an inner side of the first airbag and fixed to two side surfaces of the first airbag in the thickness direction, the second pull strap being constructed to be provided on an inner side of the second airbag, one end thereof being constructed to be connected to a front side of the second airbag, and the other end of the pull strap being constructed to be connected between the first side flank and the second side flank. Thus, the shape of the inflated airbag is designed at low costs and in a simple manner.

FIG. 4 schematically illustrates a method for manufacturing a safety airbag according to an embodiment of the present invention. A manufacturing method of the safety airbag according to an embodiment of the present invention is described below with reference to FIG. 3.

As shown in FIG. 4, six pieces of fabric are provided, that is, a first piece of fabric W1, a second piece of fabric W2, a third piece of fabric W3, a fourth piece of fabric W4, a fifth piece of fabric W5, and a sixth piece of fabric W6. The first piece of fabric W1, the second piece of fabric W2, and the third piece of fabric W3 are used to form the second airbag 12. The first piece of fabric W1 in the inflated state is constructed to include a left portion and a right portion. The right portion is used to form the first side flank 121. The left portion is used to form the second side flank 122. In addition, the second piece of fabric W2 is constructed to be used to form a front side surface. The front side surface may be understood as a side surface facing the windshield of the vehicle, i.e., an unseen side surface of the second airbag shown in FIG. 1. The third piece of fabric W3 is constructed to be used to form the second pull strap on the inner side of the second airbag 12. The fourth piece of fabric W4 and the fifth piece of fabric W5 are used to form the first airbag 11. The sixth piece of fabric W6 is used to form the first pull strap on the inner side of the first airbag 11.

The method for manufacturing the airbag of the safety airbag of the embodiment of the present invention includes:
providing a first piece of fabric W1, and marking six feature points A1, A2, A3, B1, B2, and B3 on an upper side edge of the first piece of fabric W1, wherein the point A3 and the point B1 coincide;
marking six feature points A4, A5, A6, B6, B5, and B4 on a lower side edge of the first piece of fabric W1 ;
providing a second piece of fabric W2, and marking five feature points C1, C5, C2, C3, and C4 on the second piece of fabric W2;
causing the point A1 and the point A3 to coincide, folding an edge line A1A2 such that same overlaps with an edge line A2A3, and then connecting (for example, by means of stitching or bonding) the edge line A1A2 and the edge line A2A3 together;
causing the point B1 and the point B3 to coincide, folding an edge line B2B3 such that same overlaps with an edge line B2B1, and then connecting (for example, by means of stitching or bonding) the line B1B2 and the edge line B2B3 together; overlapping an edge line A1A4 and an edge line B3B4 and stitching same together;
causing A6 and C4 to coincide, causing B6 and C3 to coincide, and causing edge lines A6B6 and C4C3 to overlap and be stitched together; overlapping edge lines B6B5B4 and C3C2C5 and stitching same together; overlapping edge lines C4C1C5 and A6A5A4 and stitching same together;
providing a third piece of fabric W3, connecting one end of the third piece of fabric W3 to the first piece of fabric W1, for example, to a position close to the feature point A3/B1 of W1, and connecting the other end to the second piece of fabric W2, for example, the middle of W2;
providing a fourth piece of fabric W4, a fifth piece of fabric W5, and a sixth piece of fabric W6, overlapping an edge line D1D4 and an edge line D5D8 and stitching same together, overlapping an edge line D6D7 and an edge line D2D3 and stitching same together, overlapping an edge line D7D8 and an edge line D2D1 and stitching same together, overlapping an edge line F1F2 and an edge line E1E6 and stitching same together, overlapping F3F4 and E5E4 and stitching same together, and overlapping an edge line G1G2 and an edge line E2E3 and stitching same together; and
connecting the first airbag and the second airbag together at the communication openings.

It should be noted that the aforementioned method for manufacturing the airbag of the safety airbag of the present invention is merely an example, and those skilled in the art could adjust the sequence of the steps or even delete steps of the aforementioned method according to actual requirements.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A safety airbag (10) for being mounted at the top of a vehicle, comprising:
an airbag, having an inflated state and a stowed state;
and **characterized in that**:
the airbag comprises a first airbag (11) and a second airbag (12) configured to be in fluid communication with each other, the first airbag (11) extending beyond the second airbag (12) in both the front and rear direction when the airbag is in the inflated state, the second airbag (12) having a recessed portion formed by a first side flank (121) and a second side flank (122) and used to accommodate an occupant head, and
the safety airbag (10) further comprising a guide (13, 13A, 13B, 13C) provided at a connecting position of the first airbag (11) and the second airbag (12), and the guide (13, 13A, 13B, 13C) being used to guide a gas flow of one of the first airbag (11) and the second airbag (12) towards the other.

2. The safety airbag (10) according to claim 1, wherein communication openings are provided at only a portion of opposite surfaces of the first airbag (11) and the second airbag (12), and the guide (13, 13A, 13B, 13C) is provided at the communication openings, the first airbag (11) and the second airbag (12) being connected only at the communication openings to allow relative displacement of the first airbag (11) and the second airbag (12) in the inflated state.

3. The safety airbag (10) according to claim 2, wherein the guide (13, 13A, 13B, 13C) comprises a direction-changing portion (132, 132A, 132B, 132C), and gas flowing to the direction-changing portion (132, 132A, 132B, 132C) is blocked and therefore changes direction.

4. The safety airbag (10) according to claim 3, wherein the guide (13, 13A, 13B, 13C) further comprises a guiding portion (131, 131A, 131B, 131C) adjacent to the direction-changing portion (132, 132A, 132B, 132C), and the gas is guided by the guiding portion (131, 131A, 131B, 131C) after having the direction thereof changed by the direction-changing portion (132, 132A, 132B, 132C).

5. The safety airbag (10) according to claim 4, wherein the guide (13, 13A, 13B, 13C) is constructed to be formed by a single sheet, the direction-changing portion (132, 132A, 132B, 132C) being constructed to be a section of the single sheet, and the guiding portion (131, 131A, 131B, 131C) being constructed to be an opening portion of the single sheet.

6. The safety airbag (10) according to claim 5, wherein a plurality of direction-changing portions (132, 132A, 132B, 132C) are provided, and a plurality of guiding portions (131, 131A, 131B, 131C) are provided, the direction-changing portions (132, 132A, 132B, 132C) and the guiding portions (131, 131A, 131B, 131C) being alternately arranged.

7. The safety airbag (10) according to claim 1, wherein the first airbag (11) is configured to be flat in the inflated state.

8. The safety airbag (10) according to claim 7, wherein the first side flank (121) and the second side flank (122) are formed by the same piece of fabric.

9. The safety airbag (10) according to claim 8, wherein the first side flank (121) comprises a first inner side surface for forming the recessed portion, and the second side flank (122) comprises a second inner side surface for forming the recessed portion, the first inner side surface and the second inner side surface being adjacent to each other.

10. The safety airbag (10) according to claim 1, further comprising a first pull strap and a second pull strap, the first pull strap being constructed to be provided on an inner side of the first airbag (11) and fixed to two side surfaces of the first airbag (11) in the thickness direction, the second pull strap being constructed to be provided on an inner side of the second airbag (12), one end thereof being constructed to be connected to a front side of the second airbag (12), and the other end of the pull strap being constructed to be connected between the first side flank and the second side flank.
